# EUROPEAN PATENT SPECIFICATION

(11) **EP 1 923 304 B1**
(45) Date of publication and mention of the grant of the patent: **11.08.2010**
(21) Application number: 07022215.3
(22) Date of filing: 15.11.2007
(51) Int. Cl.: B62K 11/04

(54) **Vehicle**
Fahrzeug
Véhicule

(30) Priority: 15.11.2006 JP 2006308757; 19.10.2007 JP 2007272716; 01.02.2007 JP 2007022581
(43) Date of publication of application: 21.05.2008
(73) Proprietor: Yamaha Hatsudoki Kabushiki Kaisha, Iwata-shi, Shizuoka 438-8501 (JP)
(72) Inventor: Miyashiro, Shidehiko c/o Yamaha Hatsudoki Kabushiki Kaisha, Iwata-shi Shizuoka-ken 438-8501 (JP); Oguri, Kiyohiko c/o Yamaha Hatsudoki Kabushiki Kaisha, Iwata-shi Shizuoka-ken 438-8501 (JP); Okamoto, Toshio c/o Yamaha Hatsudoki Kabushiki Kaisha, Iwata-shi Shizuoka-ken 438-8501 (JP)
(74) Representative: Grünecker, Kinkeldey, Stockmair & Schwanhäusser Anwaltssozietät

(56) References cited:
- EP-A- 0 388 820
- EP-A- 1 681 229
- WO-A-01/21945
- JP-A- 2003 040 175
- JP-A- 2003 048 591
- US-A- 2 350 791
- US-A- 4 799 569

## Description

The present invention relates to a vehicle according to the preamble of independent claim 1. Such a vehicle can be taken from the prior art document EP 0 388 820 A1. In particular said prior art document discloses a motorcycle construction that lends itself to motocross use and yet which has a lightweight racing type frame with an engine arrangement to provide a low center of gravity. Although the engine is positioned low in the frame, its components and specifically the intake and exhaust pipe system are designed so as to be well protected and a protective covering surrounds the engine so as to also protect it. This protective covering is formed by a liquid tank such as a fuel tank for the engine and also serves to reinforce the frame assembly. The exhaust pipe system extends from a middle part of the vehicle between the fuel tank to one side of the vehicle and than extends across to the opposing side and to the rear of the vehicle.

Conventionally, a vehicle having an exhaust pipe has been known (see Patent Document 1, for example). The Patent Document 1 discloses a motorcycle (vehicle) having: an exhaust pipe connected to a rearward side of an engine; a shock absorber (rear suspension) located below the exhaust pipe to absorb shocks generated when a rear wheel moves up and down; and a fuel tank located above the shock absorber and the exhaust pipe. In the motorcycle, in order to ensure a sufficient length of the exhaust pipe, a part of the exhaust pipe, which runs above the shock absorber, is formed into a shape curved in the vertical direction.

Patent Document 1: JP-Y-Hei 4-18898

In the motorcycle disclosed in the Patent Document 1, the fuel tank is located above the shock absorber and the exhaust pipe, and the part of the exhaust pipe, which runs above the shock absorber (rear suspension), is formed into a shape curved in the vertical direction. This, however, leads to a problem that the location of the fuel tank is too high. The present invention is made in order to solve the foregoing problem, and an object of the invention is to provide a vehicle as indicated above which prevents a member disposed above a rear suspension from being located too high, while ensuring a sufficient length of an exhaust pipe.

According to the present invention said object Is solved by a vehicle having the features of independent claim 1.

Preferably, the winding-form part includes: a first portion connected to the engine and extending upward to the rear; a second portion extending downward and being connected to the first portion extending upward to the rear; and a third portion extending further upward to the rear from the second portion extending downward.

Further, preferably the rear suspension is located in front of the rear wheel, and the winding-form part of the exhaust pipe is located at the rear of the rear suspension and in front of the movable region of the rear wheel.

According to a preferred embodiment, the vehicle further comprises a rear arm supported swingeably by a body frame, wherein the exhaust pipe is disposed at a location apart from the rear arm with a given distance, when viewed from the side of the vehicle.

According to another preferred embodiment, the vehicle further comprises a fuel tank, wherein the winding-form part of the exhaust pipe is located at the rear of the fuel tank.

According to yet another preferred embodiment, the vehicle further comprises a seat, wherein at least a part of the seat is located above the winding-form part.

According to a preferred embodiment, the vehicle further comprises a body frame including a pair of frames located apart from each other at a predetermined interval in the width direction of the vehicle body, wherein the winding-form part of the exhaust pipe is located between inner sides of the pair of frames of the body frame, when viewed in plan.

Preferably, at least a part of the exhaust pipe, which is adjacent to a connecting part connected to the engine, is substantially in a straight form.

Therein, it is beneficial if the vehicle further comprises a silencer connected to the exhaust pipe and located at the upper side and the rear of the engine.

It is further beneficial if the vehicle further comprises a chain located on the side opposed to the silencer in a vehicle width direction to drive the rear wheel.

Preferably, the winding-form part includes: the first portion located on the silencer side in the vehicle width direction; the second portion connected to the first portion located on the silencer side and extending toward the chain side in the vehicle width direction; and the third portion connected to the second portion extending toward the chain side, while being connected to the silencer.

Further, preferably the silencer connected to the exhaust pipe is located at the upper side and the rear of the engine, wherein an axis of connection between the exhaust pipe and the silencer is provided at a location higher than an axis of connection between the exhaust pipe and the engine.

Still further, preferably the vehicle is a motorcycle.

In particular, preferably, the motorcycle is an off-road motorcycle.

In the following, the present invention is explained in greater detail with respect to several embodiments thereof in conjunction with the accompanying drawings, wherein:
- FIG. 1: is a side view showing an overall construction of a motorcycle according to one embodiment,
- FIG. 2: is a top plan view showing a structure of the motorcycle according to the embodiment shown in FIG. 1,
- FIG.3: is a side view showing a structure of the motorcycle according to the embodiment shown in FIG. 1,
- FIG.4: is a side view showing an engine and its surroundings of the motorcycle according to the embodiment shown in FIG. 1,
- FIG. 5: is a sectional view taken along the line 100-100 in FIG. 4,
- FIG. 6: is a sectional view showing a structure of the engine of the motorcycle according to the embodiment shown in FIG. 1, and
- FIG. 7: is a top plan view showing a structure of a rear arm of the motorcycle according to the embodiment shown in FIG. 1.

### Description of Reference Numerals and Symbols;

1: motorcycle (vehicle)
8a:left stay (frame)
8b:right stay (frame)
11: body frame
19: rear arm
21: rear wheel
23: rear suspension
27: fuel tank
28: seat
29: engine
44: exhaust pipe
44a:connecting part
44d:coil-form part (winding-form part)
44f:portion (portion extending upward to rear, portion located on silencer side)
44g:portion (portion extending downward, portion extending on chain side)
44h:portion (portion extending further upward to rear from portion extending downward, portion connected to silencer side)
47: muffler (silencer)
50: chain
A:tire house (movable region)
L4, L5:axis of connection

A preferred embodiment will be described hereinafter with reference to the drawings.

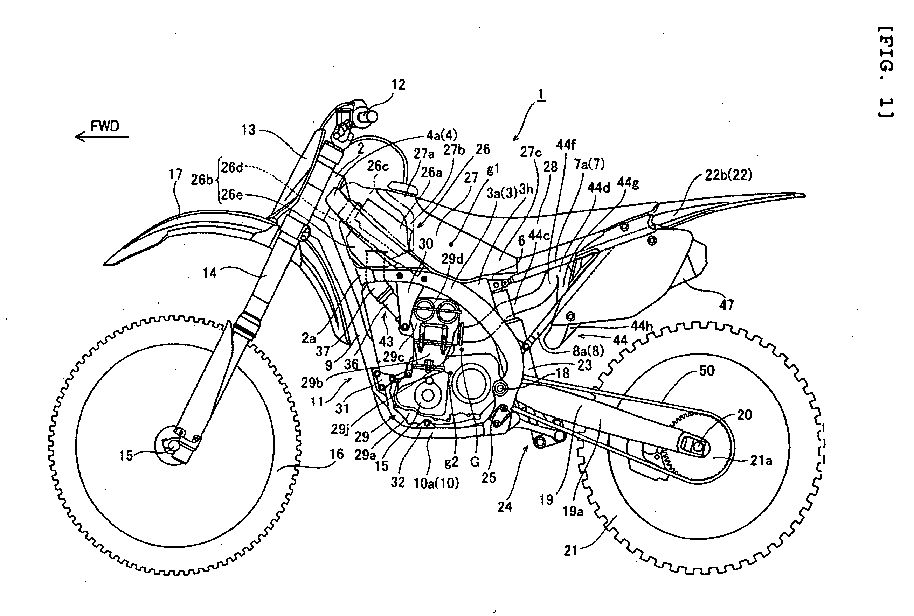

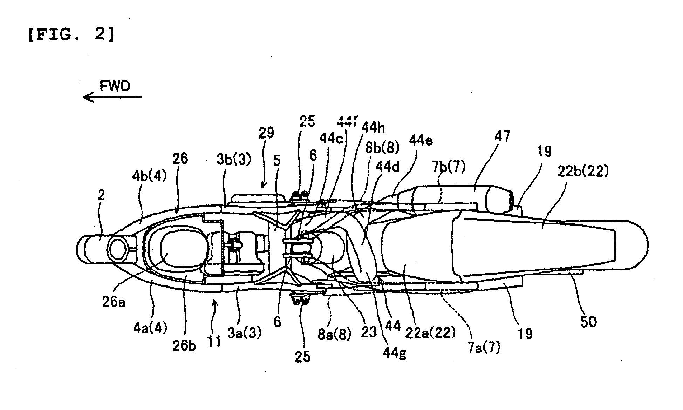

FIG. 1 is a side view showing an overall construction of a motorcycle according to one embodiment. FIGS. 2 to 7 illustrate a structure of the motorcycle according to the embodiment shown in FIG. 1. In the embodiment, an off-road motorcycle will be described as an example of the vehicle of the present teaching. The direction indicated by the arrow FWD in the drawings is a forward traveling direction of the motorcycle. The structure of the motorcycle 1 according to the embodiment will be described below with reference to FIGs. 1 to 7.

As shown in FIG. 1, in the overall structure of the motorcycle 1 according to the embodiment, a left frame 3a and a right frame 3b (see FIG. 2) of a main frame 3 are connected to a connecting part 2a of a head pipe 2. Meanwhile, left and right in the embodiment are the left and right sides as viewed from a rider facing toward the forward traveling direction (the direction indicated by the arrow FWD), respectively. The left frame 3a and the right frame 3b of the main frame 3 are formed to extend downward to the rear. A left tank rail 4a and a right tank rail 4b (see FIG. 2) of a tank rail 4 are located between a rear part of the head pipe 2 and a top part of the left frame 3a and between a rear part of the head pipe 2 and a top part of the right frame 3b, respectively. As shown in FIG. 2, a top rear part of the left frame 3a and a top rear part of the right frame 3b are coupled with each other through a connecting member 5. A left rail 7a and a right rail 7b of a seat rail 7 extending upward to the rear are connected to the connecting member 5 through a support 6 formed integral with the connecting member 5. As shown in FIG. 1, a left stay 8a of a backstay 8 is connected between the left frame 3a and the left rail 7a of the seat rail 7. In turn, a right stay 8b of the backstay 8 is connected between the right frame 3b and the right rail 7b of the seat rail 7 (see FIG. 2). As shown in FIG. 2, the left stay 8a and the right stay 8b are spaced from each other at a given interval in the width direction of the vehicle body (the left-right direction relative to the forward traveling direction). The left stay 8a and the right stay 8b are an example of the "pair of frames" of the present teaching.

As shown in FIG. 1, a down tube 9 extending downward to the rear is located on the bottom side of the head pipe 2. A left bottom frame 10a and a right bottom frame (not shown) of a bottom frame 10 are located at a bottom end of the down tube 9 to connect the down tube 9, and the left frame 3a and the right frame 3b (see FIG. 2) of the main frame 3, respectively. The head pipe 2, the main frame 3, the tank rail 4, the seat rail 7, the backstay 8, the down tube 9, and the bottom frame 10 form a body frame 11.

Handlebars 12 are pivotally disposed on the top of the head pipe 2. In addition, a front number plate 13 for covering the front part of the head pipe 2 is located in front of the head pipe 2. A pair of front forks 14 are located below the head pipe 2. An axle 15 is fixed to bottom ends of the pair of front forks 14. A front wheel 16 is rotatably mounted to the axle 15. A front fender 17 is located above the front wheel 16 to cover an upper part of the front wheel 16.

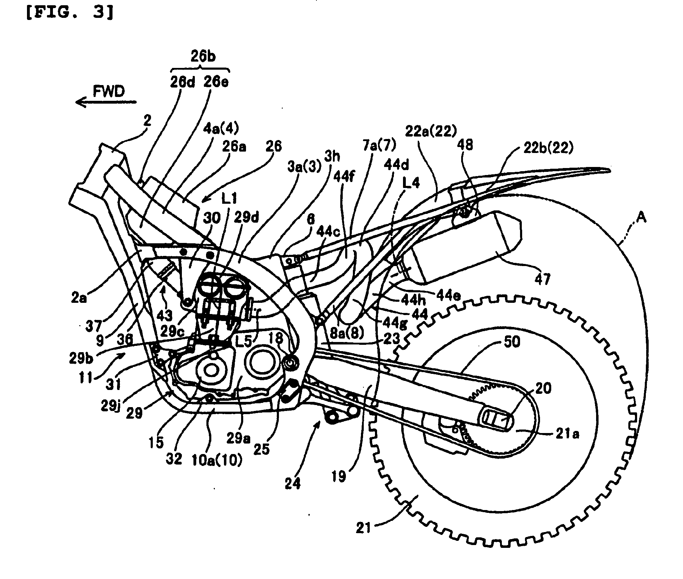

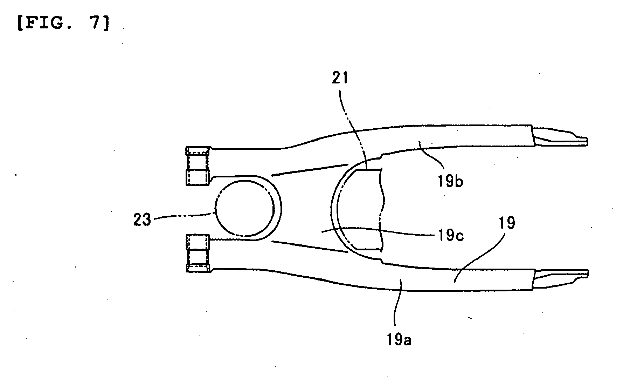

A pivot shaft 18 is provided through the main frame 3. The pivot shaft 18 supports a front end of a rear arm 19 for vertical pivotal movement. As shown in FIG. 7, the rear arm 19 includes a left arm 19a, a right arm 19b, and a coupling part 19c for coupling the left arm 19a with the right arm 19b. A rear suspension 23, which will be discussed later, is disposed in a region surrounded by a front part of the left arm 19a, a front part of the right arm 19b, and the coupling part 19c. An axle 20 is fixed to a rear end of the rear arm 19. A rear wheel 21 is rotatably mounted to the axle 20. The rear wheel 21 is provided with a driven sprocket 21 that rotates together with the rear wheel 21. A chain 50 meshes with the driven sprocket 21 a. The chain 50 is adapted to be driven by an engine 29 that will be discussed later. The driven sprocket 21 a and the chain 50 are located on the left in the vehicle width direction. Above the rear wheel 21, a rear fender 22 is disposed to cover an upper part of the rear wheel 21. As shown in FIG. 3, a front fender 22a and a rear fender 22b are integral with each other, forming the rear fender 22.

As shown in FIG. 1, the rear suspension 23 is located at the rear of the main frame 3 and in front of the rear wheel 21. An upper part of the rear suspension 23 is supported by the main frame 3 through the support 6 (see FIG. 2) of the connecting member 6, while a lower part of the rear suspension 23 is coupled with the rear arm 19 through a coupling member 24. This allows the rear suspension 23 to absorb shocks generated when the rear arm 19 and the rear wheel 21 swing (move) up and down. Footrest holding plates 25, designed to hold footrests (not shown), are fixed to the left frame 3a and the right frame 3b (see FIG. 2) of the main frame 3, respectively.

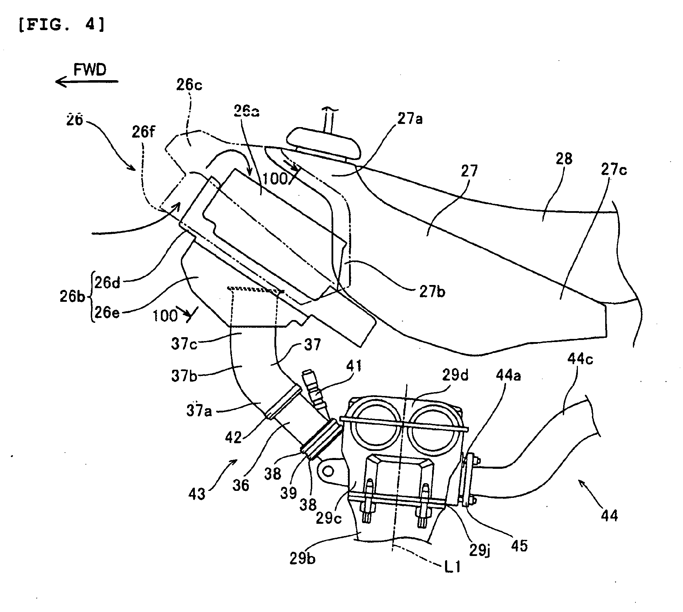

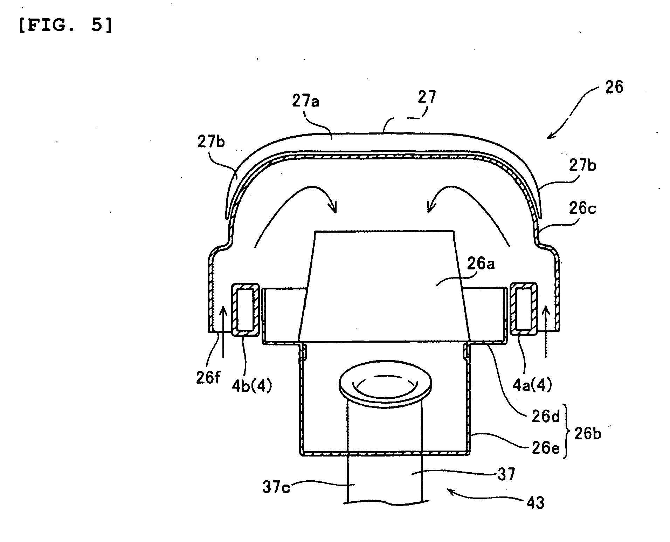

As shown in FIG. 2, an air cleaner 26 is located between the left tank rail 4a and the right tank rail 4b of the tank rail 4. As shown in FIG. 1, the air cleaner 26 is located in front of and above the engine 29 that will be discussed later. As shown in FIG. 4, the air cleaner 26 includes a sponge filter 26a, a cleaner case 26b for housing the filter 26a therein, and a cover member 26c for covering an upper part of the cleaner case 26b. The cleaner case 26b includes an upper case part 26d to which the filter 26a is fixed, and a lower case part 26e in which a funnel 37 is disposed. The funnel 37 will be discussed later. An opening 26f is formed in a diagonally front lower part of the cover member 26c. As shown in FIG. 5, the opening 26f is formed to allow air to flow therein from the front. Air enters from the opening 26f and flows through the filter 26a into the lower case part 26e of the cleaner case 26b. Also, the opening 26f is located rearward relative to the front number plate 13 (see FIG. 1). This can prevent foreign matters (water, pebbles and so forth) from entering the opening 26f of the cover member 26c.

As shown in FIG. 4, on the rear side of the air cleaner 26, a fuel tank 27 made of resin is disposed such that it extends rearward from the air cleaner 26. This allows a center of gravity g1 of a heavy load or the fuel tank 27 to be close to a center of gravity G of the vehicle, as shown in FIG. 1, the center of gravity G being located rearward relative to the center of gravity g1 of the fuel tank 27, thereby reducing the moment of inertia about the center of gravity G of the vehicle. This results in an improvement in operability of the vehicle about its center of gravity G. The fuel tank 27 includes an upper overlying part 27a, which lies over the upper part of the air cleaner 26, a side overlying part 27b, which lies over the side part of the air cleaner 26, and a rear overlying part 27c, which lies over the upper part of the rear suspension 23. A front part of the seat 28 is located above the fuel tank 27 and the rear suspension 23. The seat 28 is formed to extend to the rear of the fuel tank 27.

The engine 29 is located below the main frame 3. The engine 29 is fixed by a support plate 30 fastened to the main frame 3, a support plate 31 fastened to the down tube 9, and a support plate 32 fastened to the bottom frame 10.

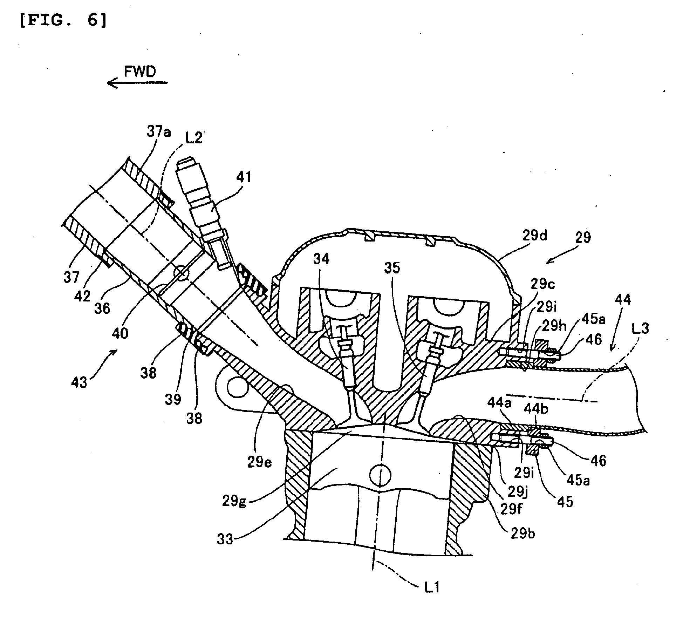

The engine 29 is oriented with its cylinder axis L1 (see FIG. 4) angled rearward by approximately 5 degrees. This allows a center of gravity g2 of a heavy load or the engine 29 to be close to the center of gravity G of the vehicle, thereby reducing the moment of inertia about the center of gravity G of the vehicle. In the embodiment, the center of gravity G of the vehicle is located rearward relative to the center of gravity g2 of the engine 29. As shown in FIG. 6, the engine 29 includes a crankcase 29a (see FIG. 3), a cylinder 29b having a piston 33 disposed therein, a cylinder head 29c disposed above the cylinder 29b, and a cylinder head cover 29d.

The cylinder head 29c of the engine 29 has therein an intake port 29e extending forward in the engine 29, an exhaust port 29f extending rearward in the engine 29, and a combustion chamber 29g to which the intake port 29e and the exhaust port 29f are connected. As described above, the intake port 29e is formed on the forward side of the engine 29 whose cylinder axis L1 is angled rearward. This allows a space to be created around the intake port 29e formed on the forward side of the engine 29, and therefore allows an intake pipe 43 in a straight form to be connected to the intake port 29e of the engine 29. The intake pipe 43 will be discussed later. An intake valve 34 for opening or closing the intake port 29e is disposed at the intake port 29e. An exhaust valve 35 for opening or closing the exhaust port 29f is disposed at the exhaust port 29f.

A throttle body 36 and the funnel 37 made of resin are connected to the intake port 29e formed on the forward side of the cylinder head 29c. Specifically, a coupling member 39 made of rubber is fastened on its one end side (downstream side) to an opening end of the intake port 29e by means of a band member 38. In turn, the throttle body 36 extending obliquely upward in a straight form is fastened to the coupling member 39 on its other end side (upstream side) by means of the band member 38. A throttle valve 40 designed to adjust the amount of air to flow through the intake port 29e is disposed within the throttle body 36. A fuel injector 41 designed to supply fuel (gasoline) to the engine 29 is attached to the throttle body 36. The fuel injector 41 is mounted on the side opposed (rearward side) to the side where the down tube 9 is disposed (forward side) with respect to the throttle body 36. The funnel 37 designed to supply air flowing through the air cleaner 26 to the engine 29 is fastened to the throttle body 36 on its upstream side by means of a band member 42. The coupling member 39, the throttle body 36, and the funnel 37 form the intake pipe 43. A lower part of the intake pipe 43 is located between the engine 29 and the down tube 9.

As shown by an axis L2 in FIG. 6, a part of the intake port 29e on its upstream side, the coupling member 39, the throttle body 36 and a downstream part 37a of the funnel 37 are substantially in a straight form extending upward to the front. As described above, a part of the intake pipe 43, which is adjacent to the engine 29, is in a straight form, which allows a reduction in intake resistance of the air drawn into the engine 29, compared to the case where a part of the intake pipe 43, which is adjacent to the engine 29, is curved or where a part of the intake pipe 43, which is spaced apart from the engine 29, is in a straight form. This allows an improvement in performance of the engine 29.

As shown in FIG. 4, the funnel 37 also includes a curved part 37b, located upstream of the downstream part 37a and an upstream part 37c located upstream of the curved part 37b and extending substantially right upward toward the air cleaner 26 in a straight form. An upper part of the upstream part 37c is located within the cleaner case 26b of the air cleaner 26.

As shown in FIG. 6, an exhaust pipe 44 is connected to the exhaust port 29f formed on the rearward side of the cylinder head 29c. Specifically, two screw holes 29i and recesses 29h are formed adjacent to an opening end of the exhaust port 29f of the cylinder head 29c. A connecting part 44a of the exhaust pipe 44 is inserted into the recess 29h. A step 44b is formed at a downstream end of the connecting part 44a of the exhaust pipe 44 to attach a fixing member 45 to the step 44b. Stud bolts 46 are screwed into two screw holes 45a of the fixing member 45 and the two screw holes 29i of the cylinder head 29c, respectively, in order to fasten the fixing member 45 to the cylinder head 29c. In this manner, the connecting part 44a of the exhaust pipe 44 is fixed to the cylinder head 29c. As shown in FIG. 3, when viewed from the side of the vehicle, the exhaust pipe 44 is disposed at a location apart from the rear arm 19 with a given distance in the vertical direction.

In the embodiment, as shown by an axis L3 in FIG. 6, a part of the exhaust pipe 44, which is adjacent to the connecting part 44a connected to the cylinder head 29c, is substantially in a straight form. As described above, a part of the exhaust pipe 44, which is adjacent to the engine 29, is in a straight form, which allows a reduction in exhaust resistance of the air discharged from the engine 29, compared to the case where a part of the exhaust pipe 44, which is adjacent to the engine 29, is curved or where a part of the exhaust pipe 44, which is spaced apart from the engine 29, is in a straight form. This allows a further improvement in performance of the engine 29.

As shown in FIG. 3, the exhaust pipe 44 has a portion 44c connected to the straight-form part adjacent to the engine 29 and extending upward to the rear. The exhaust pipe 44 also has a coil-form part 44d connected to the portion 44c extending upward to the rear and a rear part 44e extending upward to the rear and located downstream of the coil-form part 44d. The coil-form part 44d is an example of the "winding-form part" of the present teaching.

In the embodiment, as shown in FIG. 3, the coil-form part 44d is located at the rear of the rear suspension 23 and in front of the tire house A of the rear wheel 21. In other words, the coil-form part 44d is located in a region defined between the rear suspension 23 and the tire house A of the rear wheel 21. The tire house A is an example of the "movable region" of the present teaching.

In the embodiment, as shown in FIG. 1, the coil-form part 44d is also located at the rear of the fuel tank 27. Thereby, the fuel tank 27 is prevented from being located above both the rear suspension 23 and the coil-form part 44d, thereby preventing the location of the fuel tank 27 from being too high. This allows the center of gravity g1 of a heavy load or the fuel tank 27 to be close to the center of gravity G of the vehicle, the center of gravity G being located lower relative to the center of gravity g1 of the fuel tank 27, thereby reducing the moment of inertia about the center of gravity G of the vehicle. This results in an improvement in operability of the vehicle about its center of gravity G. The coil-form part 44d is also located below the seat 28 and rearward relative to a center part of the seat 28, and located lower relative to a top surface of the seat rail 7.

In the embodiment, as shown in FIG. 2, the coil-form part 44d has a winding form that extends across the width direction of the vehicle body, when viewed in plan. Specifically, the coil-form part 44d includes: a portion 44f extending upward to the rear from the upstream side toward the downstream side and located on the right in the vehicle width direction; a portion 44g connected to the portion 44f and extending downward on the left in the vehicle width direction; and a portion 44h connected to the portion 44g, located on the right of the vehicle width direction, and extending further upward to the rear. The portion 44f is an example of the "portion extending upward to the rear" and "portion located on the silencer side" of the present teaching. The portion 44g is an example of the "portion extending downward" and the "portion extending on the chain side" of the present teaching. The portion 44h is an example of the "portion extending further upward to the rear from the portion extending downward" and the "portion connected to the silencer side" of the present teaching.

In the embodiment, the coil-form part 44d is located between the inner sides of the left stay 8a and the right stay 8b of the body frame 11, when viewed in plan.

The rear part 44e of the exhaust pipe 44 is connected to the muffler 47 located at the upper side and the rear of the engine 29. The muffler 47 is located on the right in the vehicle width direction. In addition, the muffler 47 is supported by the right rail 7b (see FIG. 2) of the seat rail 7 through a support plate 48. The muffler 47 is an example of the "silencer" of the present teaching.

An axis of connection L4 between the rear part 44e of the exhaust pipe 44 and the muffler 47 is disposed at a location higher than an axis of connection L5 between the connecting part 44a (see FIG. 3) of the exhaust pipe 44 and the engine 29. In addition, the axis of connection L4 between the rear part 44e of the exhaust pipe 44 and the muffler 47 and the axis of connection L5 between the connecting part 44a of the exhaust pipe 44 and the engine 29 are provided at a location higher than the rear end 29j of a cylinder plane (top surface of the cylinder 29b) of the engine 29.

All parts of the exhaust pipe 44 are disposed at a location higher than the axle 20, the rear arm 19, and the crankcase 29a of the engine 29. This allows the exhaust pipe 44 to connect to the muffler 47, while preventing the exhaust pipe 44 from passing below the axle 20, the rear arm 19, the engine 29 and so forth. Therefore, the exhaust pipe 44 is prevented from contacting the ground, for example, when the vehicle travels off-road places, such as mountain roads. This results in prevention of damage to the exhaust pipe 44.

As described above, in the embodiment, the exhaust pipe 44 includes the coil-form part 44d that is formed between the rear suspension 23 and the tire house A of the rear wheel 21. This allows the coil-form part 44d of the exhaust pipe 44 to be located at the rear of the rear suspension 23, thereby preventing the coil-form part 44d of the exhaust pipe 44 from being located above the rear suspension 23. Therefore, the locations of the fuel tank 27 and the seat 28, both disposed above the rear suspension 23, are prevented from being too high. In addition, the exhaust pipe 44 includes the coil-form part 44d that is formed between the rear suspension 23 and the tire house A of the rear wheel 21, thereby ensuring a sufficient length of the exhaust pipe 44 easily.

In the embodiment, the coil-form part 44d of the exhaust pipe 44 winds to extend across the width direction of the vehicle body, when viewed in plan. This prevents the coil-form part 44d from increasing in size in the longitudinal direction of the vehicle body, and therefore, prevents the region defined between the rear suspension 23 and the tire house A from increasing in the longitudinal direction of the vehicle body. Thereby, the vehicle body is prevented from increasing in size in the longitudinal direction.

In the embodiment, the coil-form part 44d includes the portion 44f extending upward to the rear, the portion 44g connected to the portion 44f and extending downward, and the portion 44h extending further upward to the rear from the portion 44g. This allows the exhaust pipe 44 and the muffler 47 to be connected to each other at a lower location. Therefore, the locations of the seat rail 7 and the seat 28, both disposed above the exhaust pipe 44 and the muffler 47, are prevented from being too high. This prevents the rider's position from being too high.

In the embodiment, the exhaust pipe 44 is disposed at a location apart from the rear arm 19 with a given distance in the vertical direction, when viewed from the side of the vehicle body. This eliminates the need for the rear arm 19 to have a clearance designed to prevent the exhaust pipe 44 from contacting the rear arm 19, and therefore eliminates the need for the rear arm 19 to have a thinner part. This ensures rigidity of the rear arm 19.

In the embodiment, the coil-form part 44d includes the portion 44f located on the muffler 47 side (right side) in the vehicle width direction, the portion 44g connected to the portion 44f and extending toward the chain 50 side (left side) in the vehicle width direction, and the portion 44h connected to the portion 44g and located on the muffler 47 side (right side) in the vehicle width direction. This allows the coil-form part 44d of the exhaust pipe 44 to be formed to extend from the muffler 47 side (right side) toward the chain 50 side (left side) and back to the muffler 47 side (right side). Thereby, a space defined between the muffler 47 and the chain 50 is more effectively utilized as a region where the coil-form part 44d is disposed.

In the embodiment, the left stay 8a and the right stay 8b are spaced apart from each other at a predetermined interval in the width direction of the vehicle body. Also, the coil-form part 44d of the exhaust pipe 44 is located between the inner sides of the left stay 8a and the right stay 8b of the body frame 11, when viewed in plan. This allows the vehicle body to prevent from increasing in size in its width direction, while ensuring a sufficient length of the exhaust pipe 44.

It should be understood that the embodiment disclosed herein is given as a mere illustration in all respects, but not given to impose any limitation.

As shown as an example in the embodiment, the present teaching applies to a motorcycle. However, the present teaching is not limited to that, and may be applicable to other vehicles, such as an automobile, a bicycle, a tricycle, and an all terrain vehicle (ATV).

As shown as an example in the embodiment, the vehicle applies to an off-road motorcycle. However, the present teaching is not limited to that, and the vehicle may be applicable to an on-road motorcycle.

As shown as an example in the embodiment, the winding-form part of the exhaust pipe winds to extend across the width direction of the vehicle body, when viewed in plan.

As shown as an example in the embodiment, the coil-form part of the exhaust pipe is located at the rear of the fuel tank. However, the present teaching is not limited to that, and the coil-form part of the exhaust pipe may be located below the fuel tank.

As shown as an example in the embodiment, the engine is oriented with its cylinder axis angled rearward. However, the present teaching is not limited to that, and the engine may be oriented with its cylinder axis angled forward or with its cylinder axis extending vertically.

As shown as an example in the embodiment, a part of the exhaust pipe, which is adjacent to the connecting part connected to the engine, is substantially in a straight form. However, the present teaching is not limited to that, and a part of the exhaust pipe, which is adjacent to the connecting part connected to the engine, may not be necessarily in a straight form.

The description above discloses (amongst others), in order to achieve the foregoing object, a first preferred embodiment directed to a vehicle comprising: an engine, an exhaust pipe connected to a rearward side of the engine; a rear wheel; and a rear suspension for absorbing shocks generated when the rear wheel moves up and down, wherein the exhaust pipe is provided with a winding-form part, said winding-form part being located between the rear suspension and a movable region of the rear wheel within which the rear wheel moves up and down, and said winding-form part of the exhaust pipe has a winding form that extends across a width direction of a vehicle body, when viewed in plan, wherein the winding-form part is coil shaped and extends from a first side of the vehicle in the vehicle width direction to a second side of the vehicle in the vehicle width direction and back to the first side of the vehicle in the vehicle width direction.

As described above, in the vehicle according to the first preferred embodiment, the winding-form part is formed in the exhaust pipe, the winding-form part being located between the rear suspension and the movable region of the rear wheel within which the rear wheel moves up and down. Therefore, the winding-form part of the exhaust pipe is located, for example, at the rear of the rear suspension, which prevents the winding-form part of the exhaust pipe from being located above the rear suspension. Thereby, the location of a member, disposed above the rear suspension, is prevented from being too high. The winding-form part is formed in the exhaust pipe, the winding-form part being located between the rear suspension and the movable region of the rear wheel within which the rear wheel moves up and down. This also ensures a sufficient length of the exhaust pipe easily.

Moreover, such a construction prevents the winding-form part from increasing in size In a longitudinal direction of the vehicle body, and therefore, prevents a region defined between the rear suspension and the movable region from increasing in the longitudinal direction of the vehicle body. Thereby, the vehicle body is prevented from increasing in size in the longitudinal direction.

In the vehicle according to a further preferred embodiment, preferably, the winding-form part includes: a portion connected to the engine and extending upward to the rear; a portion connected to the portion extending upward to the rear, while extending downward; and a portion extending further upward to the rear from the portion extending downward. Such a construction allows the exhaust pipe and a silencer to be connected to each other at a lower location. Therefore, in the case when a seat rail and a seat are disposed above the exhaust pipe and the silencer, the locations of the seat rail and the seat are prevented from being too high. This prevents the rider's position from being too high.

In the vehicle according to a further preferred embodiment, preferably the rear suspension is located in front of the rear wheel, and the winding-form part of the exhaust pipe is located at the rear of the rear suspension and in front of the movable region of the rear wheel. Such a construction easily prevents the winding-form part of the exhaust pipe from being located above the rear suspension, and therefore, easily prevents the location of the member, disposed above the rear suspension, from being too high.

In such a case, preferably, the vehicle further preferably has a rear arm supported swingeably by a body frame, in which the exhaust pipe is disposed at a location apart from the rear arm at a given distance, when viewed from the side of the vehicle. Such a construction eliminates the need for the rear arm to have a clearance designed to prevent the exhaust pipe from contacting the rear arm, and therefore, eliminates the need for the rear arm to have a thinner part. This ensures rigidity of the rear arm. Preferably, the vehicle according to a further preferred embodiment, further has a fuel tank, in which the winding-form part of the exhaust pipe is located at the rear of the fuel tank. Such a construction prevents the fuel tank from being located above both the rear suspension and the winding-form part of the exhaust pipe, and therefore, prevents the location of the fuel tank from being too high. This allows a center of gravity of a heavy load or the fuel tank to be close to a center of gravity of the vehicle, when the center of gravity of the vehicle is located lower than the center of gravity of the fuel tank, thereby reducing the moment of inertia about the center of gravity of the vehicle. This results in an improvement in operability of the vehicle about its center of gravity.

Preferably, the vehicle according to a further preferred embodiment, further has a seat, at least a part of the seat being located above the winding-form part. In such a case where at least a part of the seat is located above the winding-form part, the winding-form part and the seat are both prevented from being located above the rear suspension, and therefore, the location of the seat is prevented from being too high.

Preferably, the vehicle according to a further preferred embodiment, further has a body frame including a pair of frames located apart from each other at a predetermined interval in the width direction of the vehicle body, in which the winding-form part of the exhaust pipe is located between inner sides of the pair of frames of the body frame, when viewed in plan. Such a construction prevents the vehicle body from increasing in size in its width direction, while ensuring a sufficient length of the exhaust pipe.

In the vehicle according to a further preferred embodiment, preferably, at least a part of the exhaust pipe, which is adjacent to a connecting part connected to the engine, is substantially in a straight form. Such a construction allows the at least the part of the exhaust pipe, which is adjacent to the connecting part connected to the engine, to reduce exhaust resistance of air discharged from the engine. This improves engine performance.

In such a case, preferably, the vehicle further preferably has: a silencer connected to the exhaust pipe and located at the upper side and the rear of the engine. Preferably, a chain located on the side opposed to the silencer in a vehicle width direction to drive the rear wheel. In particular, preferably, the winding-form part includes: a portion located on the silencer side in the vehicle width direction; a portion connected to the portion located on the silencer side and extending toward the chain side in the vehicle width direction; and a portion connected to the portion extending toward the chain side, while being connected to the silencer. Such a construction allows the winding-form part of the exhaust pipe to be formed to extend from the silencer side toward the chain side, and back to the silencer side. Thereby, a space defined between the silencer and the chain is more effectively utilized as a region where the winding-form part is disposed.

Preferably, in the vehicle according to a further preferred embodiment, the silencer is furthermore connected to the exhaust pipe and located at the upper side and the rear of the engine, in which an axis of connection between the exhaust pipe and the silencer is provided at a location higher than an axis of connection between the exhaust pipe and the engine. Such a construction allows the exhaust pipe to connect to the silencer, while preventing the exhaust pipe from passing below the engine and so forth. Therefore, the exhaust pipe is prevented from contacting the ground, for example, when the vehicle travels off-road places, such as mountain roads, thereby preventing damage to the exhaust pipe.

Preferably, the vehicle according to a further preferred embodiment is a motorcycle, in particular preferably an off-road motorcycle. Such a construction allows to obtain an off-road motorcycle, which ensures a sufficient length of the exhaust pipe, while preventing the location of the member, disposed above the rear suspension, from being too high.

## Claims

1. Vehicle comprising:
an engine (29);
an exhaust pipe (44) connected to a rearward side of the engine (29);
a rear wheel (21); and
a rear suspension (23) for absorbing shocks generated when the rear wheel (21) moves up and down, wherein
the exhaust pipe (44) is provided with a winding-form part (44d), said winding-form part (44d) being located between the rear suspension (23) and a movable region (A) of the rear wheel (21) within which the rear wheel (21) moves up and down, and said winding-form part (44d) of the exhaust pipe (44) has a winding form that extends across a width direction of a vehicle body, when viewed in plan,
**characterized in that**
the winding-form part (44d) is coil shaped and extends from a first side of the vehicle in the vehicle width direction to a second side of the vehicle in the vehicle width direction and back to the first side of the vehicle in the vehicle width direction.

2. Vehicle according to claim 1, **characterized in that** the winding-form part (44d) includes: a first portion (44f) connected to the engine (29) and extending upward to the rear; a second portion (44g) extending downward and being connected to the first portion (44f) extending upward to the rear; and a third portion (44h) extending further upward to the rear from the second portion (44g) extending downward.

3. Vehicle according to claim 1 or 2, **characterized in that** the rear suspension (23) is located in front of the rear wheel (21), and the winding-form part (44d) of the exhaust pipe (44) is located at the rear of the rear suspension (23) and in front of the movable region (A) of the rear wheel (21).

4. Vehicle according to one of the claims 1 to 3, **characterized by** a rear arm (19) supported swingeably by a body frame, wherein the exhaust pipe (44) is disposed at a location apart from the rear arm (19) with a given distance, when viewed from the side of the vehicle.

5. Vehicle according to one of the claims 1 to 4, **characterized by** a fuel tank (27), wherein the winding-form part (44d) of the exhaust pipe (44) is located at the rear of the fuel tank (27).

6. Vehicle according to one of the claims 1 to 5, **characterized by** a seat (28), wherein at least a part of the seat is located above the winding-form part.

7. Vehicle according to one of the claims 1 to 6, **characterized by** a body frame including a pair of frames (8a,8b) located apart from each other at a predetermined interval in the width direction of the vehicle body, wherein the winding-form part (44d) of the exhaust pipe (44) is located between inner sides of the pair of frames (8a, 8b) of the body frame, when viewed in plan.

8. Vehicle according to one of the claims 1 to 7, **characterized in that** at least a part (44c) of the exhaust pipe (44), which is adjacent to a connecting part connected to the engine (29), is substantially in a straight form.

9. Vehicle according to one of the claims 1 to 8, **characterized by** a silencer (47) connected to the exhaust pipe (44) and located at the upper side and the rear of the engine (29).

10. Vehicle according to claim 9, **characterized by** a chain (50) located on the side opposed to the silencer (47) in a vehicle width direction to drive the rear wheel (21).

11. Vehicle according to claim 10, **characterized in that** the winding-form part (44d) includes: a first portion (44f) located on the first side which is the silencer side in the vehicle width direction; a second portion (44g) connected to the first portion (44f) located on the silencer side and extending toward the second side which is the chain side in the vehicle width direction; and a third portion (44h) connected to the second portion (44g) extending toward the chain side, said third portion (44h) is extending back to the first side while being connected to the silencer (47).

12. Vehicle according to one of the claims 9 to 11, **characterized in that** the silencer (47) connected to the exhaust pipe (44) is located at the upper side and the rear of the engine (29), wherein an axis (L4) of connection between the exhaust pipe (44) and the silencer (47) is provided at a location higher than an axis (L5) of connection between the exhaust pipe (44) and the engine (29).

13. Vehicle according to one of the claims 1 to 12, **characterized in that** the vehicle is a motorcycle.

14. Vehicle according to claim 13, **characterized in that** the motorcycle is an off-road motorcycle.

## Patentansprüche

1. Fahrzeug, aufweisend:
eine Brennkraftmaschine (29);
ein Abgasrohr (44), verbunden mit einer hinteren Seite der Brennkraftmaschine (29);
ein Hinterrad (21); und
eine hintere Aufhängung (23) zum Absorbieren von Stößen, die erzeugt werden,
wenn sich das Hinterrad (21) auf und ab bewegt, wobei
das Abgasrohr (44) mit einem gewundenen Formteil (44d) versehen ist, das gewundene Formteil (44d) zwischen der hinteren Aufhängung (23) und einem bewegbaren Bereich (A) des Hinterrades (21), innerhalb dessen sich das Hinterrad auf und ab bewegt, angeordnet ist, und das gewundene Formteil (44d) des Abgasrohres (44) eine Windungsform hat, die sich quer über eine Breitenrichtung einer Fahrzeugkarosserie erstreckt, wenn in Draufsicht gesehen,
**dadurch gekennzeichnet, dass**
das gewundene Formteil (44d) schraubenförmig ist und sich von einer ersten Seite des Fahrzeuges in der Breitenrichtung des Fahrzeuges zu einer zweiten Seite des Fahrzeuges in der Breitenrichtung des Fahrzeuges und zurück zu der ersten Seite des Fahrzeuges in der Richtung der Breite des Fahrzeuges erstreckt.

2. Fahrzeug nach Anspruch 1, **dadurch gekennzeichnet, dass** das gewundene Formteil (44d) enthält: einen ersten Abschnitt (44f), verbunden mit der Brennkraftmaschine (29) und der sich nach oben nach hinten erstreckt; einen zweiten Abschnitt (44g), der sich nach unten erstreckt und der mit dem ersten Abschnitt (44f), der sich nach oben nach hinten erstreckt, verbunden ist; und einen dritten Abschnitt (44h), der sich weiter nach oben nach hinten erstreckt von dem zweiten Abschnitt (44g), der sich nach unten erstreckt.

3. Fahrzeug nach Anspruch 1 oder 2, **dadurch gekennzeichnet, dass** die hintere Aufhängung (23) vor dem Hinterrad (21) angeordnet ist und das gewundene Formteil (44d) des Abgasrohres (44) hinter der hinteren Aufhängung (23) und vor dem bewegbaren Bereich (A) des Hinterrades (21) angeordnet ist.

4. Fahrzeug nach einem der Ansprüche 1 bis 3, **gekennzeichnet durch** einen hinteren Arm (19), schwingbar **durch** einen Karosserierahmen gelagert, wobei das Abgasrohr (44) an einer Stelle von dem hinteren Arm (19) mit einem gegebenen Abstand entfernt angeordnet ist, wenn von der Seite des Fahrzeuges gesehen.

5. Fahrzeug nach einem der Ansprüche 1 bis 4, **gekennzeichnet durch** einen Kraftstofftank (27), wobei das gewundene Formteil (44d) des Abgasrohres (44) hinter dem Kraftstofftank (27) angeordnet ist.

6. Fahrzeug nach einem der Ansprüche 1 bis 5, **gekennzeichnet durch** einen Sitz (28), wobei zumindest ein Teil des Sitzes oberhalb des gewundenen Formteiles angeordnet ist.

7. Fahrzeug nach einem der Ansprüche 1 bis 6, **gekennzeichnet durch** einen Karosserierahmen, der ein Rahmenpaar (8a, 8b) enthält, voneinander mit einem bestimmten Abstand in der Breitenrichtung der Fahrzeugkarosserie beabstandet angeordnet, wobei das gewundene Formteil (44d) des Abgasrohres (44) zwischen den Innenseiten des Rahmenpaares (8a, 8b) des Karosserierahmens angeordnet ist, wenn in der Draufsicht gesehen.

8. Fahrzeug nach einem der Ansprüche 1 bis 7, **dadurch gekennzeichnet, dass** zumindest ein Teil (44c) des Abgasrohres (44), das benachbart ist zu einem Verbindungsteil, verbunden mit der Brennkraftmaschine (29), im Wesentlichen in einer geraden Form ist.

9. Fahrzeug nach einem der Ansprüche 1 bis 6, **gekennzeichnet durch** einen Schalldämpfer (47), verbunden mit dem Abgasrohr (44) und auf der oberen Seite und hinter der Brennkraftmaschine (29) angeordnet.

10. Fahrzeug nach Anspruch 9, **gekennzeichnet durch** eine Kette (50), angeordnet auf der Seite gegenüberliegend zu dem Schalldämpfer (47) in einer Breitenrichtung des Fahrzeuges, um das Hinterrad (21) anzutreiben.

11. Fahrzeug nach Anspruch 10, **dadurch gekennzeichnet, dass** das gewundene Formteil (44d) enthält: einen ersten Abschnitt (44f), angeordnet auf der ersten Seite, die die Seite des Schalldämpfers in Breitenrichtung des Fahrzeuges ist; einen zweiten Abschnitt (44g), verbunden mit dem ersten Abschnitt (44f), angeordnet auf der Schalldämpferseite und sich in Richtung zu der zweiten Seite erstreckend, die die Kettenseite in Breitenrichtung des Fahrzeuges ist; und einen dritten Abschnitt (44h), verbunden mit dem zweiten Abschnitt (44g), der sich in Richtung zu der Kettenseite erstreckt, wobei sich der dritte Abschnitt (44h) zurück zu der ersten Seite erstreckt, während er mit dem Schalldämpfer (47) verbunden ist.

12. Fahrzeug nach einem der Ansprüche 9 bis 11, **dadurch gekennzeichnet, dass** der Schalldämpfer (47), verbunden mit dem Abgasrohr (44), auf der oberen Seite und hinter der Brennkraftmaschine (29) angeordnet ist, wobei eine Achse (L4) der Verbindung zwischen dem Abgasrohr (44) und dem Schalldämpfer (47) an einem Ort höher als eine Achse (L5) der Verbindung zwischen dem Abgasrohr (44) und der Brennkraftmaschine (29) angeordnet ist.

13. Fahrzeug nach einem der Ansprüche 1 bis 5, **dadurch gekennzeichnet, dass** das Fahrzeug ein Motorrad ist.

14. Fahrzeug nach Anspruch 13, **dadurch gekennzeichnet, dass** das Motorrad ein Geländemotorrad ist.

## Revendications

1. Véhicule comprenant:
un moteur (29) ;
un tuyau d'échappement (44) relié à un côté arrière du moteur (29) ;
une roue arrière (21) ; et
une suspension arrière (23) pour absorber les chocs produits quand la roue arrière (21) monte et descend, dans lequel
le tuyau d'échappement (44) est pourvu d'une pièce de forme sinueuse (44d), laquelle se trouve entre la suspension arrière (23) et une zone mobile (A) de la roue arrière (21) dans laquelle la roue arrière (21) monte et descend, et ladite pièce de forme sinueuse (44d) du tuyau d'échappement (44) a une forme sinueuse qui s'étend dans le sens de la largeur d'un corps de véhicule, vue en plan,
**caractérisé en ce que** la pièce de forme sinueuse (44d) a la forme d'un serpentin et s'étend d'un premier côté du véhicule, dans le sens de la largeur de celui-ci, jusqu'à un second côté du véhicule, dans le sens de la largeur de celui-ci, pour revenir au premier côté du véhicule, dans le sens de la largeur de celui-ci.

2. Véhicule selon la revendication 1, **caractérisé en ce que** la pièce de forme sinueuse (44d) comprend : une première partie (44f) qui est reliée au moteur (29) et qui s'étend vers le haut et vers l'arrière ; une deuxième partie (44g) qui s'étend vers le bas et qui est reliée à la première partie (44f) s'étendant vers le haut et vers l'arrière; une troisième partie (44h) qui s'étend vers le haut et vers l'arrière à partir de la deuxième partie (44g) s'étendant vers le bas.

3. Véhicule selon la revendication 1 ou 2, **caractérisé en ce que** la suspension arrière (23) se trouve devant la roue arrière (21), et la pièce de forme sinueuse (44d) du tuyau d'échappement (44) se trouve à l'arrière de la suspension arrière (23) et devant la zone mobile (A) de la roue arrière (21).

4. Véhicule selon l'une quelconque des revendications 1 à 3, **caractérisé par** un bras arrière (19) qui est supporté de manière flottante par un châssis de corps, le tuyau d'échappement (44) étant disposé à un endroit espacé du bras arrière (19) d'une distance donnée, vu du côté du véhicule.

5. Véhicule selon l'une des revendications 1 à 4, **caractérisé par** un réservoir de carburant (27), la pièce de forme sinueuse (44d) du tuyau d'échappement (44) se trouvant à l'arrière du réservoir de carburant (27).

6. Véhicule selon l'une des revendications 1 à 5, **caractérisé par** un siège (28), une partie au moins du siège se trouvant au-dessus de la pièce de forme sinueuse.

7. Véhicule selon l'une des revendications 1 à 6, **caractérisé par** un châssis de corps qui comprend une paire de châssis (8a, 8b) espacés d'une distance prédéterminée, dans le sens de la largeur du corps de véhicule, la pièce de forme sinueuse (44d) du tuyau d'échappement (44) se trouvant entre des côtés intérieurs de la paire de châssis (8a, 8b) du châssis de corps, vue en plan.

8. Véhicule selon l'une des revendications 1 à 7, **caractérisé en ce qu'**une partie au moins (44c) du tuyau d'échappement (44) qui est voisine d'une pièce de liaison reliée au moteur (29) a globalement une forme droite.

9. Véhicule selon l'une des revendications 1 à 8, **caractérisé par** un silencieux (47) qui est relié au tuyau d'échappement (44) et qui se trouve sur le côté supérieur et à l'arrière du moteur (29).

10. Véhicule selon la revendication 9, **caractérisé par** une chaîne (50) qui se trouve sur le côté opposé au silencieux (47), dans le sens de la largeur du véhicule, pour entraîner la roue arrière (21).

11. Véhicule selon la revendication 10, **caractérisé en ce que** la pièce de forme sinueuse (44d) comprend : une première partie (44f) qui se trouve sur le premier côté qui est le côté du silencieux, dans le sens de la largeur du véhicule ; une deuxième partie (44g) qui est reliée à la première partie (44f) située sur le côté du silencieux et qui s'étend vers le second côté qui est le côté de la chaîne, dans le sens de la largeur du véhicule ; et une troisième partie (44h) qui est reliée à la deuxième partie (44g) s'étendant vers le côté de la chaîne, la troisième partie (44h) revenant vers le premier côté tout en étant reliée au silencieux (47).

12. Véhicule selon l'une des revendications 9 à 11, **caractérisé en ce que** le silencieux (47) relié au tuyau d'échappement (44) se trouve sur le côté supérieur et à l'arrière du moteur (29), un axe (L4) de liaison entre le tuyau d'échappement (44) et le silencieux (47) étant prévu à un endroit situé plus haut qu'un axe (L5) de liaison entre le tuyau d'échappement (44) et le moteur (29).

13. Véhicule selon l'une des revendications 1 à 12, **caractérisé en ce que** le véhicule est un motocycle.

14. Véhicule selon la revendication 13, **caractérisé en ce que** le motocycle est un motocycle tout-terrain.
